Europäisches Patentamt

European Patent Office

Office européen des brevets

(19)

(11) Veröffentlichungsnummer: **0 042 557**
**A2**

(12) **EUROPÄISCHE PATENTANMELDUNG**

(21) Anmeldenummer: **81104546.7**

(22) Anmeldetag: **12.06.81**

(51) Int. Cl.³: **G 01 F 11/02**

(30) Priorität: **20.06.80 DE 3023003**

(43) Veröffentlichungstag der Anmeldung:
**30.12.81 Patentblatt 81/52**

(84) Benannte Vertragsstaaten:
**AT BE CH DE FR GB IT LI NL**

(71) Anmelder: **Ludwig Schwerdtel GmbH.**
**Boschstrasse 8**
**D-8047 Karlsfeld(DE)**

(72) Erfinder: **Lang, Hans-Jörg**
**Haus No. 61**
**D-8061 Biberbach(DE)**

(72) Erfinder: **Schwerdtel, Ernst**
**Am Blütenanger 24**
**D-8000 München 50(DE)**

(74) Vertreter: **Rau, Manfred, Dr. Dipl.-Ing.**
**Postfach 91 04 80 Lange Zeile 30**
**D-8500 Nürnberg 91(DE)**

(54) Dosiergerät für schwer fliessfähige Materialien.

(57) Ein Dosiergerät für schwer fließfähige Materialien, insbesondere Farben, weist einen Dosierzylinder (19) auf, in dem ein mit einem hydraulisch beaufschlagbaren Kolben-Zylinder-Antrieb (22) gekoppelter Dosierkolben (20) angeordnet ist, wobei dem Dosierzylinder (19) ein Mehr-Wege-Ventil (26) vorgeordnet ist, an das einerseits eine Leitung (27) zur Zuführung des Materials und andererseits eine Druckleitung (28) zum Ausschieben des dosierten Materials mittels des Antriebs zu einem Abfüllventil (29) angeschlossen sind, die wahlweise mit dem Dosierzylinder (19) verbindbar sind.

Um ein derartiges Dosiergerät zu schaffen, mittels dessen auch von zahlreichen Walzenstühlen od. dgl. das Material aufgenommen und dosiert werden kann, ohne daß eine Zwischenförderung erforderlich ist, ist das Dosiergerät (3) als fahrbare selbständige Einheit ausgebildet, ist an ihm ein offener Vorratsbehälter (7) vorgesehen, aus dem die als Saugleitung (27) ausgebildete Leitung zur Zuführung des Materials zum Dosierzylinder (19) ausmündet und ist der Antrieb (22) für Saugbetrieb des Dosierkolbens (20) antreibbar.

FIG.1

EP 0 042 557 A2

Ludwig Schwerdtel GmbH, Boschstraße 8, 8o47 Karlsfeld

------------------------------------------------

Dosiergerät für schwer fließfähige Materialien

------------------------------------------------

Die Erfindung betrifft ein Dosiergerät gemäß dem Oberbegriff des Anspruches 1.

Insbesondere in der Farben- und Lack-Industrie, in der schwer fließfähige Materialien, beispielsweise Pigmente in verhältnismäßig geringen Mengen Lösungsmittel auf sogenannten Walzenstühlen bearbeitet werden, werden diese Materialien vom Walzenstuhl abgenommen und einer Förderanlage, beispielsweise einer Presse oder einer Pumpe zugeführt. Diese fördert die Materialien unter Druck dem Dosierzylinder eines Dosiergerätes zu, dessen Dosierkolben unter dem Druck des Materials gehoben wird, bis eine vorgegebene Füllung des Dosierzylinders erreicht ist. Anschließend wird das dem Dosierzylinder vorgeordnete Ventil geschlossen und durch entsprechende Beaufschlagung des Kolben-Zylinder-Antriebes das Material aus diesem über eine Druckleitung einem Abfüllventil zugeführt, aus dem es in eine Dose od. dgl. eingefüllt wird. Derartige Dosiergeräte mit vorgeordneten Förderanlagen haben sich in der Praxis gut bewährt; sie weisen aber den grundsätzlichen Nachteil auf, daß jedem Walzenstuhl eine eigene Förderanlage und ein eigenes Dosiergerät zugeordnet sein muß. Derartige Dosiergeräte mit vorgeschalteten Förderanlagen sind also wirtschaftlich nur dort einsetzbar, wo über sehr lange Zeiträume das gleiche Material, beispielsweise also die gleiche Farbe, hergestellt wird, und zwar in einer solchen Menge, daß ein solches Dosiergerät ausreichend ausgelastet wird. In Betrieben mit oft vorkommendem Materialwechsel oder zahlreichen kleinen Walzenstühlen sind dagegen derartige Geräte nicht oder nicht wirtschaftlich einsetzbar.

Der Erfindung liegt daher die Aufgabe zugrunde, ein Dosiergerät der gattungsgemäßen Art zu schaffen, mittels dessen auch von zahlreichen Walzenstühlen od. dgl. das Material aufgenommen und dosiert werden kann, ohne daß eine Zwischenförderung erforderlich ist. Diese Aufgabe wird durch die kennzeichnenden Merkmale des Anspruches 1 gelöst. Das Wesen der Erfindung besteht darin, daß das Dosiergerät völlig verselbständigt worden ist, d. h. durch Abkehr von dem Druckförderprinzip mittels einer gesonderten Förderanlage auf das Saug-Förder-Prinzip mit Förderung mittels des Dosierkolbens wurde der Einsatz einer gesonderten Förderanlage überflüssig. Dadurch, daß die Einheit verselbständigt und fahrbar ausgebildet wird, ist sie jederzeit an verschiedenen Orten einsetzbar. Schließlich wird ihr ein eigener Vorratsbehälter zugeordnet, in den das Material aus dem Walzenstuhl od. dgl. kommend frei hineinläuft, aus dem es dann wiederum in den Dosierzylinder gesaugt wird.

Durch die Maßnahmen nach Anspruch 2 in der vorteilhaften Ausgestaltung nach Anspruch 3 wird erreicht, daß ein Saughub des Dosierkolbens und damit ein Dosiertakt insgesamt nur eingeleitet wird, wenn genügend Material im Vorratsbehälter ist. Durch die Maßnahmen nach den Ansprüchen 4 und 5 wird es ermöglicht, sehr schnell Umstellungen auf andere Materialien vorzunehmen.

Weitere Vorteile und Merkmale der Erfindung ergeben sich aus den Unteransprüchen und aus der Beschreibung eines Ausführungsbeispiels anhand der Zeichnung. In der Zeichnung zeigt

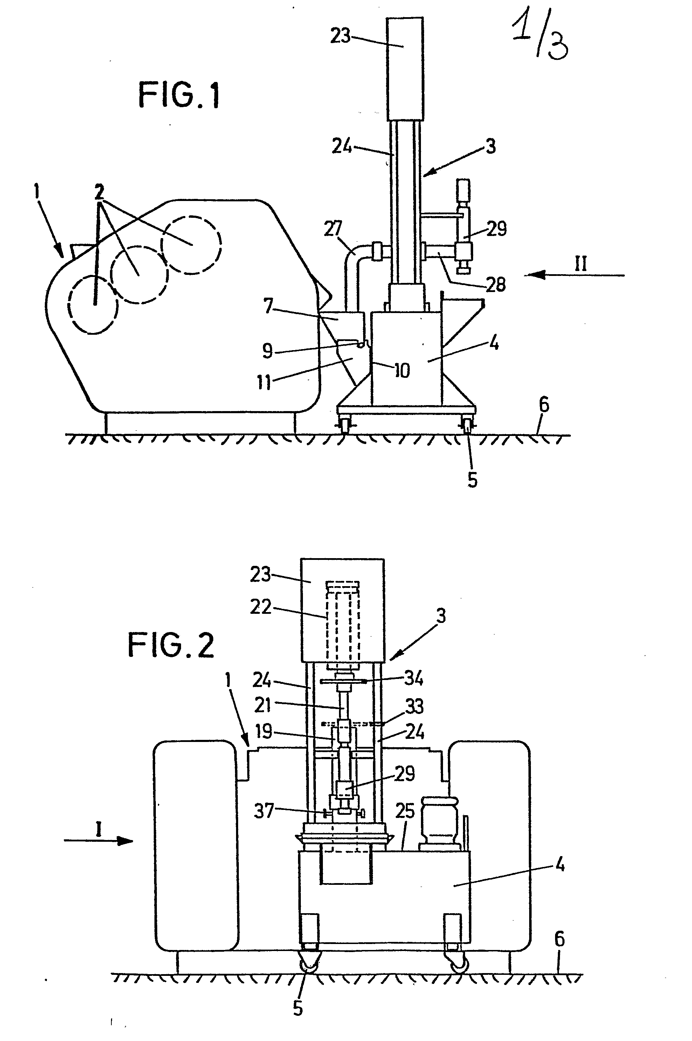

Fig. 1 eine Seitenansicht eines Dosiergerätes im Einsatz vor einem Walzenstuhl in einer Ansicht gemäß dem Sichtpfeil I in Fig. 2,

Fig. 2 das Dosiergerät mit Walzenstuhl in einer Vorderansicht gemäß dem Sichtpfeil II in Fig. 1,

Fig. 3 einen den Vorratsbehälter betreffenden Teilausschnitt aus Fig. 1 in vergrößertem Maßstab,

Fig. 4 das Dosiergerät beim Saughub in schematischer Darstellung,

Fig. 5 das Dosiergerät beim Ausdrücken des dosierten Materials in schematischer Darstellung und

Fig. 6 Einzelheiten einer Füllstands-Überwachungs-Einrichtung.

Einem Walzenstuhl 1, dessen Walzen 2 in der Zeichnung nur angedeutet sind, ist ein fahrbares Dosiergerät 3 nachgeordnet. Derartige Walzenstühle 1, insbesondere der in der Zeichnung dargestellte Drei-Walzen-Stuhl sind allgemein bekannt und werden insbesondere in der Farbenindustrie seit Jahrzehnten zum Feinmahlen von Pigmenten eingesetzt, wobei die Farben, oder sonstige Materialien den Walzenstuhl in schwer fließfähigem Zustand verlassen. Diese schwer fließfähigen (aber noch fließfähigen) Materialien werden dem Dosiergerät 3 zum Dosieren und anschließendem Abfüllen jeweils exakt dosierter Mengen in Verpackungsbehälter zugeführt.

Das Dosiergerät 3 weist ein kastenförmiges Untergestell 4 auf, das über Rollen 5 frei verfahrbar gegenüber dem Boden 6 abgestützt ist. In dem Untergestell 4 sind die für den Betrieb des Dosiergerätes erforderlichen Einrichtungen, wie ein Hydraulik-Pumpen-Aggregat, Steuereinrichtungen und dgl. untergebracht, so daß das Gerät überall eingesetzt werden kann, wenn nur ein elektrischer Stromanschluß zur Verfügung steht.

An der Rückseite des Untergestells ist ein etwa trichterförmiger Vorratsbehälter 7 angeordnet, der mittels Haltezapfen 8 in nach oben offenen Schlitzen 9 eines an der Rückwand 1o des Untergestells angebrachten Lagerbock 11 abgestützt ist. Die Haltezapfen 8 und entsprechend die Schlitze 9 sind in der Nähe der Rückwand 1o ausgebildet. Auf der der Rückwand 1o abgewandten Seite ist der Boden 12 des Vorratsbehälters 7 noch auf einer Füllstands-Überwachungs-Einrichtung 13 abgestützt, die den dritten Auflagerpunkt des Vorratsbehälters 7 bildet. Die Einrichtung 13 weist ein unteres Widerlager 14 und ein oberes Widerlager 15 auf, die beide an dem Lagerbock 11 befestigt sind.

Am unteren Widerlager ist eine Spannschraube 16 in ihrer Längsrichtung mittels eines Gewindes 16a verstellbar angebracht, gegen die sich eine vorspannbare Schrauben-Druckfeder 17 abstützt. Diese Schrauben-Druckfeder 17 stützt sich mit ihrem oberen Ende gegen einen Auflager-Zapfen 18 ab, der durch eine Bohrung 18a im oberen Widerlager 15 hindurchgreift und sich mit einem Anschlagbund 18b gegen das obere Widerlager 15 abstützt. Auf der Oberseite des Auflagerzapfens 18 ruht der Vorratsbehälter 7 mit seinem Boden 12 auf. Das Vorspannen der Druckfeder 17 erfolgt in der Weise, daß die Spannschraube 16 durch Drehen in ihrer Höhe relativ zum unteren Widerlager 14 verstellt wird, wodurch der Ringbund 18c an der Spannschraube 16, gegen den die Druckfeder 17 anliegt, ebenfalls in der Höhe verstellt wird. Da die obere Lage des Auflagerzapfens 18 durch den Anschlag des Anschlagbundes 18b gegen die Unterseite des oberen Widerlagers 15 festliegt, ist so eine Vorspannung sehr exakt einstellbar. Die Spannschraube 16 wird relativ zum unteren Widerlager 14 durch eine auf das Gewinde 16a aufgeschraubte Kontermutter 16b gesichert.

Der Füllstands-überwachungs-Einrichtung 13 ist weiterhin ein berührungslos arbeitender Initiatior, d. h. Endschalter 18d zugeordnet, der eine Bohrung 18e im oberen Widerlager 15 durchsetzt. Wenn das Gewicht des Vorratsbehälters 7, d. h. das Gewicht der in ihm enthaltenen Materialfüllung einen bestimmten, durch die Vorspannung der Druckfeder 17 vorgegebenen Wert überschreitet, dann drückt der Vorratsbehälter 7 unter Schwenkung um die Haltezapfen 8 den Auflagerzapfen 18 gegen die Kraft der Druckfeder 17 leicht nach unten, wodurch der Endschalter 18d ein Signal auslöst, das in der weiter unten noch zu erläuternden Weise ausgewertet wird.

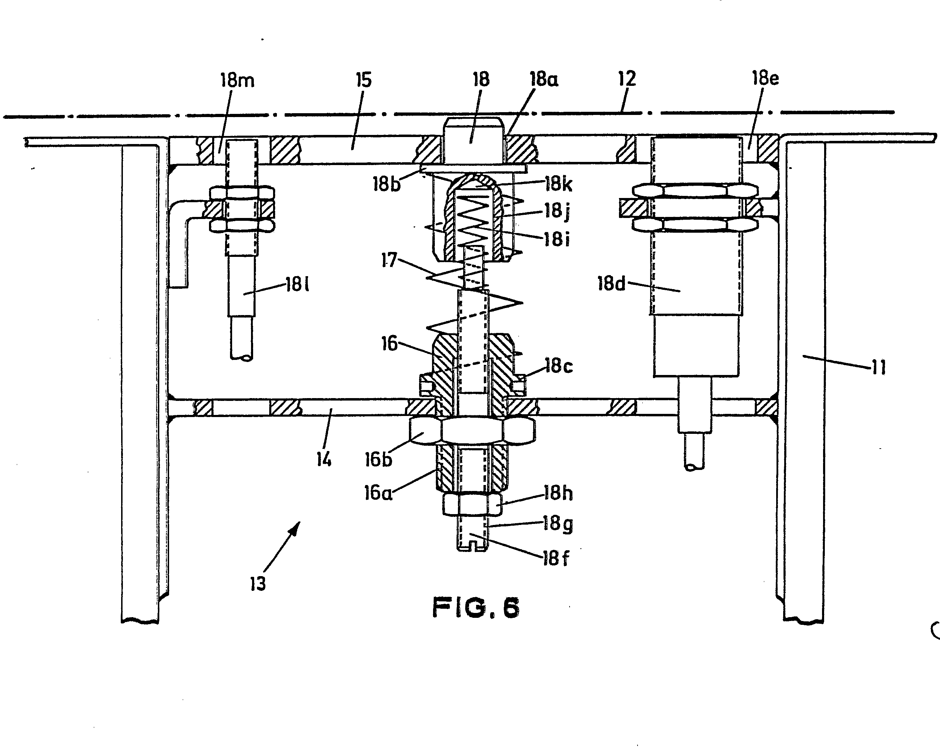

In der hohl ausgebildeten Spannschraube 16 ist eine Einstellschraube 18f mittels eines Gewindes 18g längenverstellbar angeordnet. Sie kann mittels einer auf das Gewinde 18g aufgeschraubten Sicherungsmutter 18h in ihrer Lage relativ zur Spannschraube 16 gesichert werden. Auf der Einstellschraube 18f ist eine zweite, verhältnismäßig steife, nicht vorgespannte weitere Schraubenfeder 18i angeordnet, die in einer Sackloch-Ausnehmung 18j an der Unterseite des Auflagerzapfens 18 geführt ist. Ihr oberes Ende ist in der in Fig. 6 dargestellten Ruhelage frei vom Boden 18k der Ausnehmung 18j. Der Abstand des zugeordneten Endes der Schraubenfeder 18i von dem Boden 18k der Ausnehmung 18j ist mittels der Einstellschraube 18f einstellbar. Hierzu zugeordnet ist ein ebenfalls in der Höhe einstellbarer zweiter Initiatior, also ein zweiter berührungsfrei arbeitender Endschalter 18l, der ebenfalls eine Bohrung 18m im oberen Widerlager 15 durchsetzt. Wenn das Gewicht des im Vorratsbehälter 7 befindlichen Materials das oben erläuterte Mindestgewicht erheblich überschreitet, dann wird der Auflagerzapfen so weit nach unten gedrückt, daß auch die zweite Schraubenfeder 18i zum Eingriff kommt, wodurch das Gesamtfedersystem bestehend aus der Druckfeder 17 und der Schraubenfeder 18i sehr viel steifer wird. Bei einer weiteren Auslenkung des Vorratsbehälter 7 gibt dann der Endschalter 18l ein Signal ab, das in der weiter unten noch zu erläuternden Weise ausgewertet wird.

Das eigentliche Dosiergerät ist auf dem Untergestell 4 angebracht. Es weist einen vertikal angeordneten Dosierzylinder 19 auf, in dem ein Dosierkolben 2o angeordnet ist, der wiederum am freien Ende einer längenverstellbaren Kolbenstange 21 eines hydraulisch beaufschlagbaren Kolben-Zylinder-Antriebes 22 befestigt ist. Dieser Antrieb 22 ist im wesentlichen in einem Gehäuse 23 untergebracht, das mittels vier Säulen 24 auf dem Untergestell 4 abgestützt ist, wobei der Dosierzylinder 19 zwischen den Säulen 24 auf der Oberseite 25 des Untergestells 4 abgestützt ist.

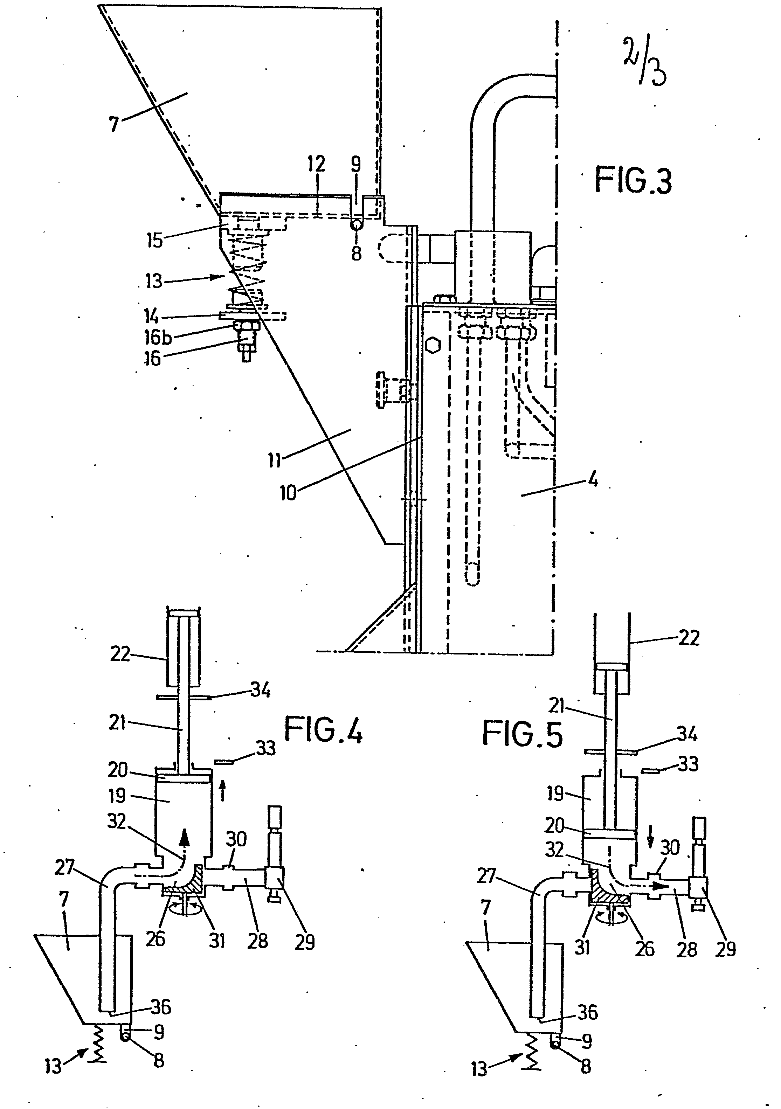

Der Dosierzylinder 19 weist in seinem unteren Bereich ein Drei-Wege-Ventil 26 auf, das einerseits über eine Saugleitung 27 mit dem Vorratsbehälter 7 verbunden ist, und das andererseits mittels einer Druckleitung 28 mit einem Abfüllventil 29 verbunden ist. Der dritte Weg des Ventils 26 führt in den Dosierzylinder 19. Die Saugleitung 27 und die Druckleitung 28 mit Abfüllventil 29 sind jeweils mittels Schnellkupplungen 3o mit den entsprechenden Anschlüssen des Ventils 26 verbunden. Das Ventil 26 ist wahlweise auf Ansaugen oder Ausdrücken einstellbar. Zum Ansaugen von Material durch die Saugleitung 27 aus dem Vorratsbehälter 7 wird ein sogenanntes Drehküken 31 in die in Fig. 4 dargestellte Stellung gedreht, in der die Druckleitung 28 verschlossen ist, während die Saugleitung 27 mit dem Dosierzylinder 19 verbunden ist. Durch entsprechende Beaufschlagung des Kolben-Zylinder-Antriebes 22 mit Druckflüssigkeit wird die Kolbenstange 21 und damit der Dosierkolben 2o nach oben bewegt und saugt aus dem Vorratsbehälter 7 eine entsprechende Menge fließfähigen Materials entsprechend dem Förderpfeil 32 in den Dosierzylinder. Die Weglänge, über die die Kolbenstange 21 und damit auch der Dosierkolben 2o bewegt wird, wird durch eine entsprechende Längeneinstellung der Kolbenstange 21 vorgegeben. Mit anderen Worten heißt dies, daß durch die entsprechende Längeneinstellung die Ausgangslage des Dosierkolbens 2o festgelegt wird. Der Ansaughub wird durch einen internen Anschlag im Hydraulikzylinder 22 begrenzt.

Zum Ausdrücken des im Dosierzylinder 19 befindlichen Materials, d. h. für den Dosierhub, wird das Drehküken 31 in die in Fig. 5 dargestellte Lage gedreht, in der es die Saugleitung 27 verschließt, aber die Druckleitung 28 freigibt. Entweder durch manuelle Auslösung oder durch ein Signal, das anzeigt, daß unter dem Abfüllventil 29 ein zu füllender Behälter vorhanden ist, wird der Antrieb 22 mit nach unten wirkender Hydraulikflüssigkeit beaufschlagt, so daß das im Dosierzylinder 19 befindliche Material mittels des Dosierkolbens 2o über die Druckleitung 28 und das Abfüllventil 29 ausgeschoben wird.

An einer der Säulen 24 ist ein berührungslos arbeitender Endschalter 33 höhenverstellbar angebracht, dem ein an der Kolbenstange 21 angebrachter Kontaktgeber 34 zugeordnet ist. Wenn letzterer den Endschalter 33 erreicht, wird das Abfüllventil 29 geschlossen und der Dosierhub beendet.

Die Füllstands-Überwachungs-Einrichtung 13 wird so eingestellt, daß der Endschalter 18d dann ein Signal abgibt, wenn die Materialfüllung, die über die Saugleitung 27 angesaugt werden kann, mindestens so groß ist, wie eine - vorgegebene - Füllung des Dosierzylinders 19, wobei selbstverständlich nur die Materialmenge berücksichtigt wird, die sich oberhalb der Saugöffnung 36 der Saugleitung 27 befindet. Erst wenn von diesem Endschalter das die entsprechende Menge im Vorratsbehälter 7 anzeigende Signal kommt, wird die den Füllhub für den Dosierzylinder 19 steuernde Schaltung freigegeben.

Wenn dagegen vom Endschalter 181 ein Signal kommt, so wird hiermit signalisiert, daß der Vorratsbehälter zu stark gefüllt ist, also überzulaufen droht.In diesem Fall wird ein Alarmsignal gegeben und/oder der Walzenstuhl 1 abgeschaltet.

Der Dosierzylinder 19 ist mittels Feststellschrauben
37 befestigt die leicht lösbar sind, so daß er selber
schnell gegen einen anderen Dosierzylinder ausgewechselt werden kann.

Patentansprüche:

1. Dosiergerät (3) für schwer fließfähige Materialien, insbesondere Farben, mit einem Dosierzylinder (19), in dem ein mit einem hydraulisch beaufschlagbaren Kolben-Zylinder-Antrieb (22) gekoppelter Dosierkolben (20) angeordnet ist, wobei dem Dosierzylinder (19) ein Mehr-Wege-Ventil (26) vorgeordnet ist, an das einerseits eine Leitung zur Zuführung des Materials und andererseits eine Druckleitung (28) zum Ausschieben des dosierten Materials mittels des Antriebs zu einem Abfüllventil (29) angeschlossen sind, die wahlweise mit dem Dosierzylinder (19) verbindbar sind, dadurch gekennzeichnet, daß das Dosiergerät (3) als fahrbare selbständige Einheit ausgebildet ist, daß an ihm ein offener Vorratsbehälter (7) vorgesehen ist, aus dem die als Saugleitung (27) ausgebildete Leitung zur Zuführung des Materials zum Dosierzylinder (19) ausmündet und daß der Antrieb (22) für Saugbetrieb des Dosierkolbens (20) antreibbar ist.

2. Dosiergerät nach Patentanspruch 1, dadurch gekennzeichnet, daß dem Vorratsbehälter (7) eine Füllstands-Überwachungs-Einrichtung (13) zugeordnet ist.

3. Dosiergerät nach Patentanspruch 2, dadurch gekennzeichnet, daß die Füllstands-Überwachungs-Einrichtung (13) eine vorspannbare Druckfeder (17) und einen zugeordneten Endschalter (18d) zur Überwachung eines Mindest-Füllstandes aufweist.

4. Dosiergerät nach Patentanspruch 2 oder 3, dadurch gekennzeichnet, daß die Füllstands-Überwachungs-Einrichtung (13) eine weitere einstellbare Feder (18i) mit einem zugeordneten weiteren Endschalter (181) zur
Überwachung eines Maximal-Füllstandes aufweist.

5. Dosiergerät nach einem der Patentansprüche 1 bis 4,
dadurch gekennzeichnet, daß der Vorratsbehälter (7)
frei auswechselbar ist.

6. Dosiergerät nach einem der Patentansprüche 1 bis 5,
dadurch gekennzeichnet, daß die Saugleitung (27) frei
auswechselbar ist.

7. Dosiergerät nach einem der Patentansprüche 1 bis 6,
dadurch gekennzeichnet, daß der Dosierzylinder (19)
frei auswechselbar ist.

FIG.1

FIG.2

0042557

12.06.81

2/3

FIG.3

FIG.4

FIG.5

FIG. 6

0042557